# EUROPEAN PATENT APPLICATION

(11) **EP 1 829 921 A2**
(43) Date of publication of application: **05.09.2007**
(21) Application number: 07000672.1
(22) Date of filing: 15.01.2007
(51) Int. Cl.: C08K 3/00, C08J 3/20, A47J 37/10

(54) **Components of vending machines for food use and method for manufacturing said components**

(30) Priority: 19.01.2006 IT MI20060081
(71) Applicant: Bianchi Vending Group S.P.A., 24049 Zingonia di Verdellino (IT)
(72) Inventor: Vergani, Tarcisio, 24040 Boltiere (Bergamo) (IT)
(74) Representative: Forattini, Amelia

(57) **Abstract**

A method for manufacturing plastic components of vending machines for food use consists in adding an antimicrobial additive to the mixture of raw material used to manufacture the component. The antimicrobial additive prevents the colonisation of bacteria, fungi and microbes.

## Description

The present invention relates to components of vending machines for food use and to a method for manufacturing the components.

The present invention is particularly useful in the production of plastic components of vending machines and the like.

As is known, in beverage vending machines, bacteria of various kinds may colonise the parts that are in contact with the water and with the product to be dispensed.

For this reason, there are standards, for example the HACCP standards, which prescribe, among other requirements, frequent sanitising of the hydraulic circuit of the machine.

WO-03103732 discloses a method for making antimicrobial polyolefin articles utilising chitosan and chitosan metal complexes as the antimicrobial agent.

The aim of the present invention is to provide components of vending machines, for food and beverages, that hinder or eliminate bacterial colonisation of the components.

An object of the invention is to provide a method for manufacturing components of vending machines for food use that are capable of limiting or completely eliminating bacterial colonisation.

Another object of the invention is to provide a method which can be applied to the components of known types of vending machine.

An important object of the invention is to provide a method for manufacturing the components of a vending machine so that the components have the inherent ability to destroy the bacteria that colonise the parts in contact with water and the product to be dispensed, for example in a vending machine.

This aim and these and other objects which will become better apparent hereinafter are achieved by a component of vending machines for food use, characterized in that it is constituted by a mixture of one or more polymers and of at least one additive which has antimicrobial characteristics.

This aim and these and other objects are also achieved by a method for manufacturing a component of a vending machine for food use, characterized in that it comprises mixing one or more polymers with at least one additive which has antimicrobial characteristics.

Further characteristics and advantages of the invention will become better apparent from the description of preferred but not exclusive embodiments thereof, illustrated by way of non-limiting example in the accompanying drawings, wherein:
Figure 1 is a schematic section view of a surface portion of a component of a vending machine manufactured according to the present invention;
Figure 2 is a diagram showing comparison curves of the trend of bacterial presence;
Figure 3 is a section view of a component of a vending machine according to the present invention;
Figure 4 is a sectional top plan view of the component of Figure 3.

With reference to the above cited figures, the method according to the invention entails that a percentage of antimicrobial additive 2 is introduced in the raw material used to manufacture a plastic component 1 of a vending machine.

The main characteristic of this additive is that it contains a percentage of silver which facilitates, as a consequence of ion exchange and/or by resonance, the control and reduction of microbial growth on the treated surface.

The period of effectiveness of this technology is proportional to the percentage of metal that is present in the mixture.

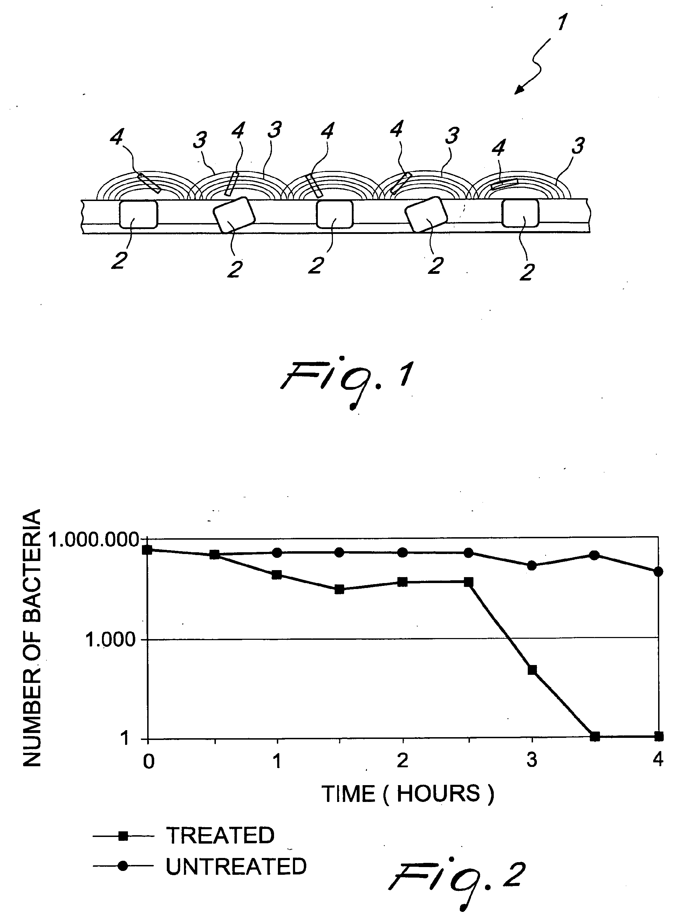

After conversion, the crystals 3 of the additive are distributed and oriented at random on the surface of the polymer, as shown schematically in Figure 1.

The reference numerals 4 designate the bacteria which may be present on the surface of the polymer 1.

The active ingredient has a three-mode effectiveness, i.e., it interferes with the growth of the cells in three ways:
1. It inhibits wall transport functions (respiration);
2. It inhibits division (reproduction);
3. It interrupts the generation of energy (metabolism).

These inhibitions reduce the possibility of developing bacteria, fungi, microbes which are resistant and their associated colonization.

In order to assess the effectiveness of the additive, two samples were produced which were made of the same polymer, one sample without the additive and one sample with 5% antimicrobial additive.

By allowing the colonisation of an average of 500,000 microbes, the trend of bacterial growth was monitored and checked every 30 minutes.

As can be seen from the trend of the chart of Figure 2, the treated polymer, after three hours and 30 minutes, had reduced by 100% the number of bacteria present at time zero on its surface.

The percentage of additive is variable depending on the applications within the vending machine.

The percentage of additive is in fact determined to ensure that the active ingredient retains its characteristics over time.

The product not only complies with the HACCP standards but ensures their applicability, reducing interventions for daily sanitising of the hydraulic circuit.

The present invention allows to build vending machines which have the inherent power to destroy the bacteria which normally colonise the parts in contact with water and the product to be dispensed.

In a vending machine, the parts subject to the addition of the antimicrobial agent are several.

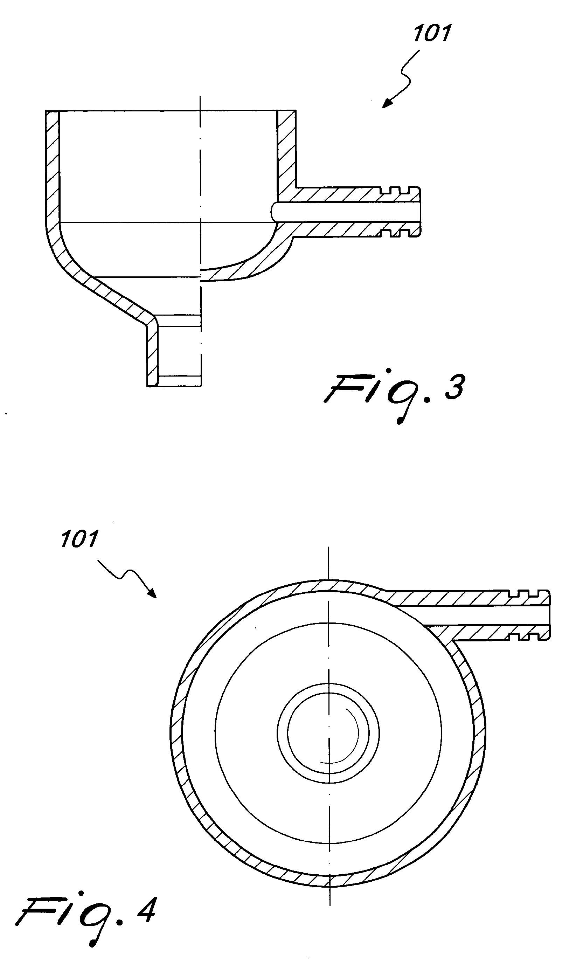

For example, one of the components which is most subject to bacterial colonisation in a vending machine is the mixing cup, shown in Figures 3 and 4 and generally designated by the reference numeral 101.

Assuming that one wishes to reduce bacteria, microbes, fungi and eliminates their consequent colonisation for at least five years, the mixture of raw material may be composed as follows:
21.28 g of PP MOPLEN H32 GA
0.6 g of BROWN MASTERBATCH
7.12 g of BACTERICIDAL ADDITIVE MASTERBATCH

This composition ensures that the active ingredient retains its characteristics over the five years which follow production.

Depending on the requirements of the user, the percentage of additive may of course change.

According to a preferred embodiment of the invention, the antimicrobial element introduced in the additive is the result of a combination of the following materials: Silver, Zinc, Sodium aluminosilicate, Ammonium.

Encapsulating the above ingredients with a polymer having crossed atomic bonds, provides a crystalline structure with antimicrobial and fungicidal characteristics, which allows to incorporate the active ingredient in the polymers used for manufacturing the plastic components of vending machines.

For the sake of simplicity, we will reference this structure as "a.m. crystal". In order to be used during injection, the a.m. crystal must be extruded with the base polymer of the composition of the component to be transformed.

Since it is a hygroscopic crystal, it is subjected to a drying treatment in order to eliminate all the humidity received from the outside environment.

To perform such process, the a.m. crystal is placed in an environment with dry air at a temperature of 70°C for an average time of 10 hours.

While maintaining this environmental situation, the a.m. crystal is incorporated in the base polymer with a twin-screw extruder. The resulting product is termed antimicrobial masterbatch, or additive.

The antimicrobial masterbatch, or additive, is then mixed with the polymers used to manufacture the component. This process occurs by using two stainless steel screw mixers, provided so as to ensure uniform distribution of the a.m. crystal over the entire surface of the plastic component which receives the additive.

The uniform distribution of the additive, and therefore of the a.m. crystal, allows to ensure the effectiveness of the antimicrobial ingredient on the treated area, both in terms of yield and in terms of durability over time, and to reinforce considerably the mechanical structure of the provided component.

Taking as reference the mixing cup of Figures 3 and 4, samples with the additive and standard samples, without the additive, were both subjected to ageing (HALT test).

It was found that the standard components age more rapidly than ones with the additive. By taking the samples to a life equal to 9 years of operation, it was in fact observed that the cups with the additive did not undergo structural and visual changes. The standard cups exhibited loss of pigment, with corresponding discolouring, ovalization of the structure and a sort of flaking of the outer layer of the plastics.

After the Halt test, the effectiveness of the antimicrobial agent with a colony of Pseudomonas aeruginosa bacteria was checked. The antimicrobial agent was 99.9997% effective.

In practice it has been found that the invention achieves the intended aim and objects, a method having been provided for manufacturing plastic components of vending machines which allows to limit or eliminate completely the onset of microbial colonies in the parts in contact with the product to be dispensed.

The method and the component according to the invention are susceptible of numerous modifications and variations, within the scope of the appended claims. All the details may be replaced with technically equivalent elements.

The materials used, as well as the dimensions, may of course be any according to the requirements and the state of the art.

## Claims

1. A component of vending machines for food use, **characterized in that** it is constituted by a mixture of one or more polymers and of at least one additive having antimicrobial characteristics.

2. The component of machines for food use according to claim 1, **characterized in that** said additive comprises at least one metal.

3. The component of machines for food use according to claim 1 or 2, **characterized in that** said additive has a crystalline structure.

4. The component of machines for food use according to one or more of the preceding claims, **characterized in that** said additive interferes with the growth of microbial cells, inhibiting wall transport functions, i.e. respiration, inhibiting division, i.e. reproduction, and interrupting energy generation, i.e., metabolism.

5. The component of machines for food use according to one or more of the preceding claims, **characterized in that** said at least one additive comprises a combination of Silver, Zinc, Sodium aluminosilicate, Ammonium.

6. The component of machines for food use according to one or more of the preceding claims, **characterized in that** said combination of Silver, Zinc, Sodium aluminosilicate, Ammonium is encapsulated with a polymer having crossed atomic bonds, providing a crystalline structure.

7. A method for manufacturing a component of a machine for food use, **characterized in that** it comprises mixing one or more polymers with at least one additive having antimicrobial characteristics.

8. The method according to claim 7, **characterized in that** said at least one additive comprises a combination of Silver, Zinc, Sodium aluminosilicate, Ammonium.

9. The method according to claim 7 or 8, **characterized in that** said combination of Silver, Zinc, Sodium aluminosilicate, Ammonium is encapsulated with a polymer having crossed atomic bonds, providing a crystalline structure.

10. The method according to one or more of claims 7-9, **characterized in that** said crystalline structure is extruded with a base polymer of the composition of said component.

11. The method according to one or more of claims 7-10, **characterized in that** said crystalline structure is a hygroscopic crystal and is subjected to a drying treatment in order to eliminate all the humidity received from the outside environment.

12. The method according to one or more of claims 7-11, **characterized in that** it comprises a drying step wherein said crystalline structure is placed in an environment with dry air at a temperature of 70°C for an average time of 10 hours.

13. The method according to one or more of claims 7-12, **characterized in that**, during said drying step, said crystalline structure is incorporated in said base polymer with a twin-screw extruder providing an antimicrobial masterbatch.

14. The method according to one or more of claims 7-13, **characterized in that** said antimicrobial masterbatch is then mixed with the polymers used to manufacture said component by using two stainless steel screw mixers.
